# EUROPÄISCHE PATENTSCHRIFT

(11) **EP 0 506 609 B1**
(45) Veröffentlichungstag und Bekanntmachung des Hinweises auf die Patenterteilung: **16.02.1994**
(21) Anmeldenummer: 92810157.5
(22) Anmeldetag: 03.03.1992
(51) Int. Cl.: F04B 39/00, F16C 3/12, F16C 3/14

(54) **Kolbenkompressor, insbesondere ölfreier Kolbenkompressor**
Piston compressor, especially oilfree piston compressor
Compresseur à piston, notamment compresseur à piston sans huile

(30) Priorität: 12.03.1991 CH 737/91
(43) Veröffentlichungstag der Anmeldung: 30.09.1992
(73) Patentinhaber: Fritz Haug AG, CH-9015 St. Gallen (CH)
(72) Erfinder: Wanner, Hans, CH-9100 Herisau (CH)
(74) Vertreter: Wenger, René

(56) Entgegenhaltungen:
- CH-A- 260 682
- DE-A- 2 435 332
- DE-C- 678 046
- DE-C- 934 801
- US-A- 1 633 770
- US-A- 1 998 083
- US-A- 2 288 596
- US-A- 3 309 941
- US-A- 4 108 506

## Beschreibung

Die Erfindung betrifft einen Kolbenkompressor, insbesondere einen ölfreien Kolbenkompressor gemäss dem Oberbegriff von Anspruch 1. Derartige Kompressoren werden zum Verdichten von Luft und von anderen gasförmigen Medien überall dort eingesetzt, wo an die Reinheit höchste Anforderungen gestellt werden. So beispielsweise im Medizinalbereich, in der Lebensmitteltechnik oder bei Gasen, welche bei Verunreinigung mit Oel chemisch reagieren, wie z.B. Sauerstoff.

Obwohl gut funktionierende ölfreie Gaskompressoren seit vielen Jahren bekannt sind, bereitet bei konventioneller Bauweise deren Wartung nach wie vor gewisse Probleme. So müssen die einmal geschmierten Wälzlager nach Erreichen ihrer vorgesehenen Lebensdauer teilweise mit anderen Bauteilen zusammen vollständig ausgetauscht werden. Relativ lange Haftsitze können Passrost bilden, wodurch das Auswechseln der Teile spezielle Abzieh- und Presswerkzeuge nötig macht. Dadurch wird die Revision am Standort der Maschine teilweise erschwert oder verunmöglicht. Daraus können relativ hohe Arbeits- und Ersatzteilkosten entstehen. Es ist daher eine Aufgabe der Erfindung, einen Kolbenkompressor der eingangs genannten Art zu schaffen, bei dem insbesondere der Montage- und Wartungsaufwand erheblich reduziert werden kann. Diese Aufgabe wird erfindungsgemäss mit einem Kolbenkompressor gelöst, der die Merkmale im Anspruch 1 aufweist.

Zusammengesetzte Kurbeltriebe an Kolbenmaschinen mit jeweils einer einzigen Kurbelscheibe sind zwar bekannt, wie aus der US-A-1,998,083 ersichtlich ist. Dabei wurde jedoch stets in der Achse der Antriebswelle oder in der Achse der Kurbelscheibe mit einem einzigen Spannbolzen gespannt, was kräftemässig ungünstig ist. Bei der erfindungsgemässen Lösung wird eine biegesteife, kompakte Verbindung erreicht, wobei das Zentrum der Kurbelscheiben frei bleibt.

Der scheibenförmige Aufau der Kurbelwelle ist für Zwei-, Drei- und Vierzylinder-Maschinen genau gleich, so dass die Ersatzteile stark vereinheitlicht werden können. Die Demontage der einzelnen Kolbensätze (umfassend Kolben, Kolbenbolzen, Kolbenbolzenlager, Pleuel und Pleuellager und Kurbelscheibe) können auf leichte Weise demontiert und wieder montiert werden. Die Kurbelscheiben sind z.B. durch Press-Sitz fest mit den ihnen zugeordneten Wälzlagern und Pleuelstangen verbunden. Die so entstehende Baueinheit lässt sich mit einfachen Hilfsmitteln montieren und demontieren, d.h. aufziehen bzw. abpressen. Diese Arbeiten können in jedem Fall am Standort der Maschine unter Zuhilfenahme von Handwerkzeugen vorgenommen werden.

Besonders vorteilhaft sind die Spannschrauben in die Antriebswelle und/oder in eine an der Antriebswelle befestigte erste Kurbelwange einschraubbar. Für die Demontage des Kurbeltriebs müssen somit lediglich die Spannschrauben gelöst werden, um die einzelnen Kurbelscheiben mit den daran befestigten Pleuelstangen und Wälzlager und Kolben entfernen zu können. Die parallel zueinander angeordneten Spannschrauben, vorzugsweise drei oder mehr, erlauben eine biegesteife und schwingungsfreie Anordnung der scheibenförmigen Kurbelwelle. Als Hilfsmittel für den Zusammenbau kommen anstelle der Spannschrauben vorteilhaft Gewindebolzen mit freidrehender Mutter, welche je nach Zylinderzahl die verschiedenen Längen ausgleichen, zur Anwendung.

Zur genauen Winkelkongruenz der Kurbelwangen und damit des Gegenlagers dient ein geschliffener Bolzen, welcher gleichzeitig durch beide Kurbelwangen und in entsprechende Bohrungen gesteckt wird. Die Kombination dieser Vorrichtungen wird ergänzt durch ein einfaches Aufhänge-Provisorium für die äussere Kurbelwange. Die Kurbelwangen sind vorzugsweise als Schwungräder ausgebildet. Die Kombination dieser Vorrichtungen ermöglicht die rasche, einfache Demontage und die absolut genaue Wiedermontage an Ort durch nicht speziell ausgebildetes Personal. Die beidseitig angeordneten Schwungräder ergeben bekanntlich einen optimalen Vibrationsausgleich. Dies ist ein weiterer Vorteil, da bei konventioneller Bauweise meist auf diese Gegenmasse aus Gründen der schwierigen Montage verzichtet wird.

Weitere Vorteile können erzielt werden, wenn das Kurbelgehäuse in der Achse der Antriebswelle mit einem Gehäusedeckel verschliessbar ist, dessen Innenseite als Lagerstelle für den Kurbeltrieb ausgebildet ist. Dabei ist es zweckmässig, wenn an der Innenseite des Gehäusedeckels eine zweite Kurbelwange bzw. ein zweites Schwungrad gelagert ist und wenn die Kurbelscheiben zwischen dem ersten und dem zweiten Schwungrad fixiert und relativ zueinander zentriert sind.

Vorzugsweise sind die Wälzlager derart auf den Kurbelscheiben angeordnet, dass sie als Zentrier- und Distanzelemente dienen und dass die Presskraft der Spannschrauben durch die Wälzlager übertragen wird.

Bei der Demontage können erhebliche Vorteile erzielt werden, wenn jede Kurbelscheibe im Zentrum eine Bohrung mit einem Gewindeabschnitt aufweist, der stirnseitig mit einer eingelegten Demontagescheibe verschliessbar ist. So kann in den Gewindeabschnitt eine Hilfsschraube eingeschraubt werden, welche sich an der Demontagescheibe abstützt. Diese wiederum verschliesst die Bohrung der nächstfolgenden Kurbelscheibe, so dass die mit der Hilfsschraube erfasste Kurbelscheibe auf einfachste Weise abgezogen werden kann. Die Demontagescheiben werden lose in jede einzelne Kurbelscheibe eingelegt und stören den Betrieb des Kompressors in keiner Weise.

Die Pleuelstangen weisen vorteilhaft einen Pleuelkranz mit einem radialen Schlitz auf, wobei im Bereich des Schlitzes eine tangential verlaufende Spannschraube angeordnet ist, mit welcher der Pleuelkranz um das ihm zugeordnete Wälzlager spannbar ist. So lassen sich die Pleuelstangen besonders einfach fest mit dem Wälzlager verbinden, um die bereits eingangs erwähnte Baueinheit bestehend aus Kurbelscheibe, Wälzlager und Pleuelstange zu bilden. Die Wälzlager mit ihren minimalen Toleranzen eignen sich hervorragend zur sehr genauen, fortlaufenden Zentrierung der Kurbelscheiben. Sie können zudem leichter de- und wiedermontiert werden als irgendwelche Pass-Sitze mit grösseren Toleranzen. In Kombination mit der besonders leicht aus- und einbaubaren Kurbelwelle ermöglicht dies den leichten Austausch der verbrauchten Wälzlager vor Ort und ohne Spezialwerkzeuge wie Pressen usw. Diese Art von Wälzlagermontage macht das Einpressen, Erwärmen, Hämmern usw. überflüssig und gewährleistet durch die seitliche Schulter einen genauen Plananschlag des neuen Lagers. Auch diese Arbeit kann somit von einem Nichtspezialisten rasch und sicher ausgeführt werden.

Die Unterhaltskosten können bezogen auf die gesamte Lebensdauer des Kompressors noch dadurch wesentlich gesenkt werden, dass jeder Pleuelkranz auf der Aussenseite eine radiale Schmieröffnung aufweist, in die eine Schmiervorrichtung einsetzbar ist und über welche ein Schmiermittel unmittelbar zum Wälzlager transportierbar ist. Obwohl die Lager mit synthetischen Spezialschmiermitteln auf Lebensdauer geschmiert sind, hat sich erwiesen, dass letztere durch eine seltene Nachschmierung nach mehreren tausend Stunden mit minimalen Fettmengen noch erhöht werden könnte.

Eine solche Nachschmierung ist nur zweckmässig, wenn neues Fett direkt an die Kugeln und deren Laufbahnen herangeführt wird, da sich das alte Fett in den Hohlräumen festsetzt und sukzessive austrocknet. Würde man den Zugang zur Lagerstelle ungünstig anbringen, so würde durch neues Fett das alte voran an die Kugeln und deren Laufbahnen geschoben, was keine sinnvolle Nachschmierung ergäbe. Aus diesem Grunde sind die Nachschmierbohrungen sehr klein gehalten und führen auf dem kürzesten Weg zu den Kugeln. Um eine Schwächung der Laufeigenschaften zu verhindern, wird die Bohrung durch den Lagerring tangential an die Kugeln herangeführt. Das Nachschmierfett wird nicht im Pleuel oder am Pleuel selbst bevorratet, sondern erst im Moment des Nachschmierens an die Lager gebracht. Dadurch ist Gewähr gegeben, dass sorgfältig gelagertes, qualitativ neuwertiges Fett zum Einsatz kommt. Von grosser Wichtikeit ist die ausschliessliche Verwendung von Spezial-Schmiermitteln, da die Pleuellager bei Verwendung falscher Fette nach wenigen hundert Stunden beschädigt würden. Um eine Verwendung falscher Schmiermittel zu verhindern, ist es vorteilhaft, unverwechselbare und nicht nachfüllbare Schmiervorrichtungen zu verwenden. Die Nachschmiermenge muss zudem genau dosiert werden können, da pro Lager und Nachschmierung nur ca. 1 cm³ Schmiermittel zur Anwendung kommt. Die Schmiervorrichtung kann beispielsweise eine mit einer Injektionsnadel durchstossbare Membran aufweisen. Eine andere Lösung besteht darin, dass die Schmiervorrichtung als Presse mit einer Depotzone ausgebildet ist, deren Volumen zum Auspressen des Schmiermittels mit einer Schraube reduzierbar ist. In beiden Fällen sind somit spezielle Hilfsmittel erforderlich, um eine genau dosierte Nachschmierung durchführen zu können. Trotzdem kann die Nachschmierung ohne grossen Aufwand in kürzester Zeit durchgeführt werden. Eine derartige Nachschmiermöglichkeit der Wälzlager kann selbstverständlich auch im Zusammenhang mit konventionellen Pleuellagern bzw. Pleuelstangen vorgesehen werden.

Der Kurbeltrieb ist besonders leicht zugänglich, wenn das Kurbelgehäuse in einem parallel zur Antriebswelle verlaufenden Abschnitt wenigstens eine verschliessbare Oeffnung aufweist, über welche die Pleuelkränze der Pleuelstangen zugänglich sind. So ist ohne Demontage der Kurbelwelle der Zugang zu den Schmierstellen gewährleistet, von denen wenigstens zwei pro Pleuel unter einem Winkel von ca. 75° am Aussenumfang vorhanden sind. Je nach der Seitenlage des Pleuels in der V-förmigen Kolbenanordnung wird diejenige Schmierstelle mit einer Schmiervorrichtung bestückt, welche durch die Öffnung besser zugänglich ist.

Ein Ausführungsbeispiel der Erfindung ist in den Zeichnungen dargestellt und wird nachstehend genauer beschrieben. Es zeigen:
- Figur 1: einen Querschnitt durch das Kurbelgehäuse eines erfindungsgemässen Kolbenkompressors,
- Figur 2: einen Schnitt durch die Ebene A-A am Gehäuse gemäss Figur 1,
- Figur 3: einen Querschnitt durch eine einzelne Kurbelscheibe,
- Figur 4: eine Draufsicht aus Pfeilrichtung B auf die Kurbelscheibe gemäss Figur 3,
- Figur 5: einen Querschnitt durch das Kurbelgehäuse gemäss Figur 1 bei der Demontage der Kurbelwelle,
- Figur 6: einen Querschnitt durch eine Pleuelstange,
- Figur 7: eine Draufsicht auf das Pleuellager der Pleuelstange gemäss Figur 6, und
- Figur 8: eine Schmiervorrichtung am Pleuelkranz des Pleuellagers.

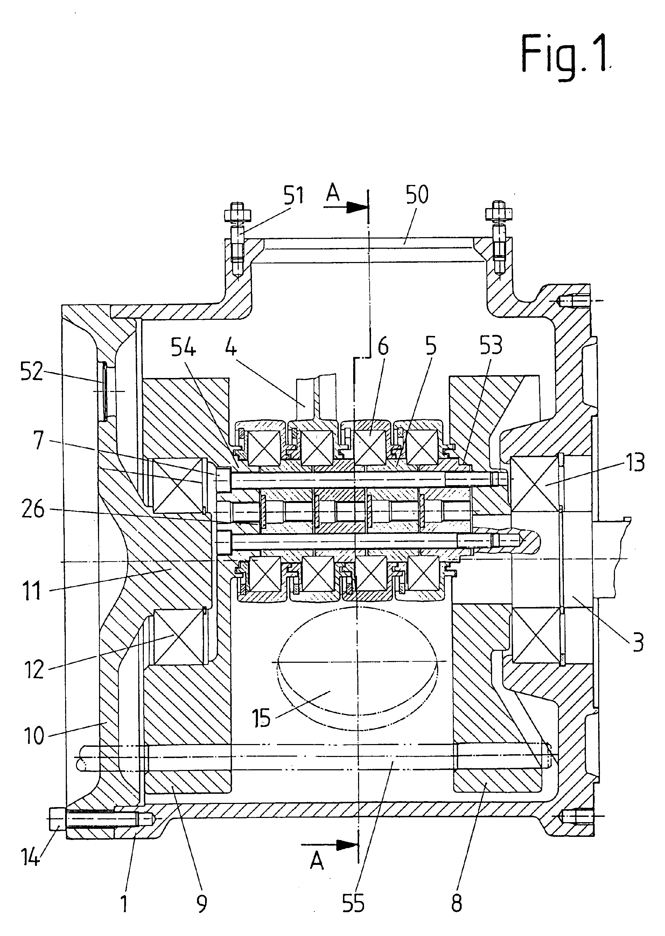

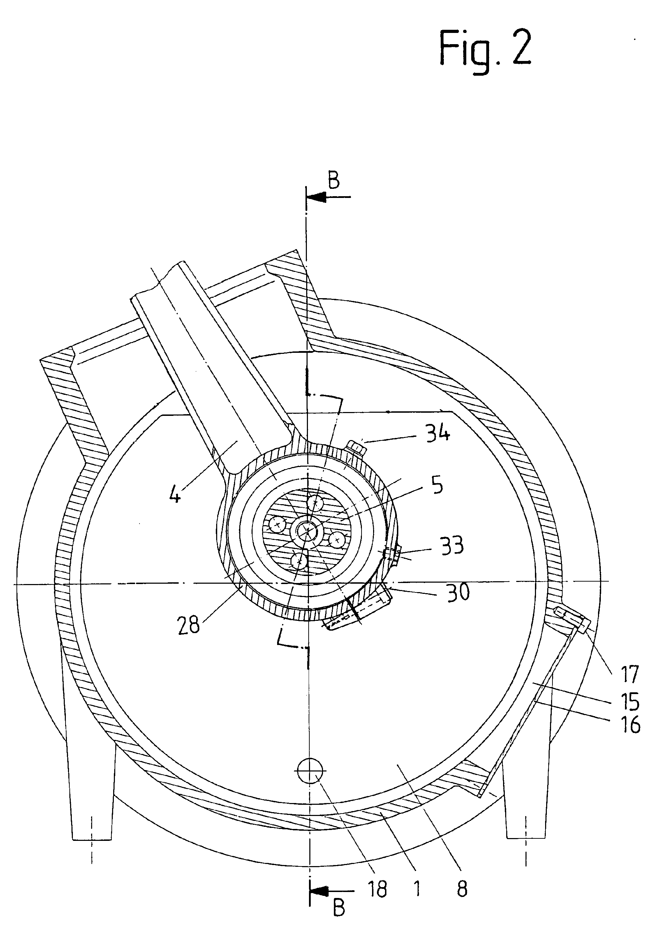

Wie aus den Figuren 1 und 2 ersichtlich ist, hat das beispielsweise aus Guss hergestellte Kurbelgehäuse 1 eine im wesentlichen zylindrische Aussenkonfiguration. Antrieb, Zylinder und Steuerteile sind in den Zeichnungen der Einfachheit halber nicht dargestellt. Dabei handelt es sich um konventionelle Bauteile, deren Anordnung und Ausbildung dem Fachmann bekannt sind. Die Zylinder bzw. die Zylinderköpfe werden an die Zylinderöffnungen 50 mit Hilfe der Verschraubungen 51 angeflanscht. Das Kurbelgehäuse besitzt eine in die Gehäusewand integrierte Lagerstelle für die Antriebswelle 3, die in einem lösbaren Wälzlager 13 gelagert ist. Die Antriebswelle 3 ist beispielsweise unmittelbar mit dem Abtrieb eines Elektromotors verbunden oder sie wird mittelbar über Keilriemen oder Flachriemen angetrieben. In der Achse der Antriebswelle 3 ist das Kurbelgehäuse 1 mit einem Gehäusedekkel 10 verschlossen, der mit Hilfe von Deckelschrauben 14 angeschraubt werden kann. Der Gehäusedeckel 10 ist zum Druckausgleich mit wenigstens einer Entlüftungsöffnung 52 versehen. In einem Wandabschnitt, der parallel zur Antriebswelle 3 verläuft, ist wenigstens eine Oeffnung 15 angeordnet, welche mit Hilfe von Schrauben 17 und mit einem Deckel 16 verschlossen werden kann. Es wäre ohne weiteres möglich, mehrere derartige Oeffnungen am Umfangsbereich des Kurbelgehäuses anzuordnen. Durch die Oeffnung 15 ist jeweils eine der Schmieröffnungen 33 am Pleuelkranz 28 leicht zugänglich. Der Schmiervorgang wird nachstehend noch genauer beschrieben.

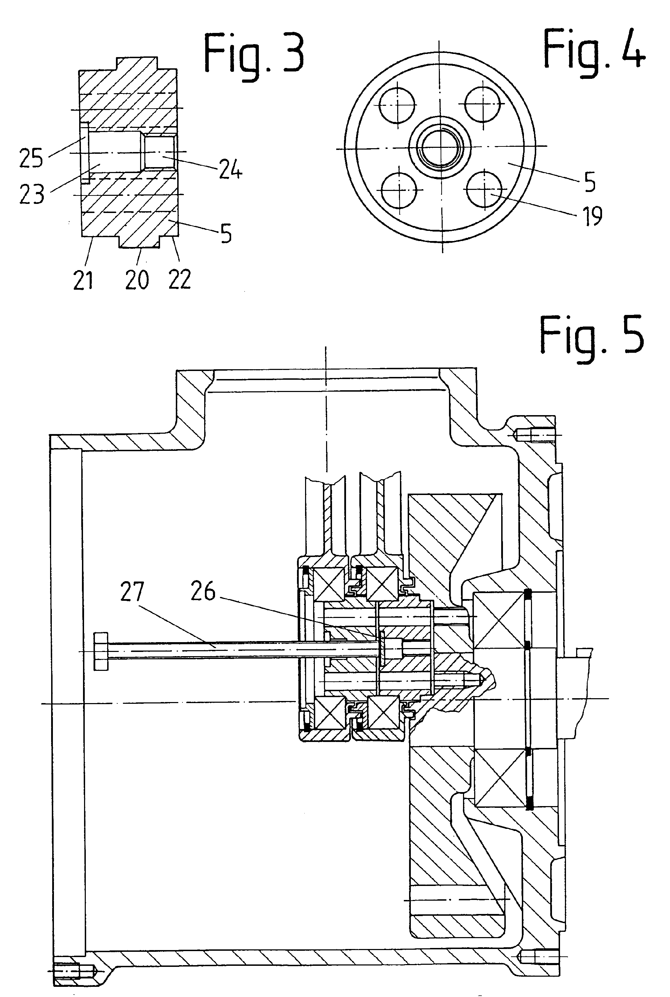

Der im Kurbelgehäuse angeordnete Kurbeltrieb besteht aus einzelnen Kurbelscheiben 5, welche mit Hilfe von Spannschrauben 7 zu einem Paket zusammengespannt werden und welche exzentrisch zur Antriebswelle 3 angeordnet sind. Die Ausbildung dieser Kurbelscheiben ist aus den Figuren 3 und 4 genauer ersichtlich. Die Kurbelscheiben haben einen breiten Zapfen 21, einen schmalen Zapfen 22 und eine dazwischenliegende umlaufende Distanzschulter 20. Die Zapfen 21 und 22 dienen der Aufnahme der Wälzlager 6, wie anschliessend noch genauer erläutert wird. Die Distanzschulter 20 dient als Abstandselement zwischen den einzelnen Wälzlagern. Im Zentrum sind die Kurbelscheiben 5 mit einer Durchgangsbohrung 23 versehen, die einen Gewindeabschnitt 24 aufweist. Am Ende jedes Gewindeabschnitts ist eine Vertiefung 25 angeordnet, die eine Demontagescheibe 26 aufnehmen kann. Jede Kurbelscheibe hat vier durchgehende Bohrungen 19 zur Aufnahme der Spannschrauben 7.

Je nach Durchmesser der Kurbelscheiben kann selbstverständlich die Anzahl dieser Bohrungen verändert werden. Auch die Aussenkonfiguration der Kurbelscheiben kann entsprechend den verwendeten Wälzlagern angepasst werden. Die Bohrungen 19 sind exzentrisch zur Mittelachse der Kurbelscheiben angeordnet.

Wie Figur 1 zeigt, sind die Kurbelscheiben zwischen einem ersten Schwungrad 8 und einem zweiten Schwungrad 9 eingespannt. Die Spannschrauben 7 sind teilweise in die Antriebswelle 3 und teilweise in das erste Schwungrad 8 eingeschraubt. Die Wälzlager 6 sitzen jeweils gleichzeitig auf dem breiten und auf dem schmalen Zapfen benachbarter Scheiben, womit eine Zentrierung und Kraftübertragung bewirkt wird. Die einzelnen Scheiben berühren sich jedoch dabei stirnseitig nicht, werden jedoch zusammengepresst. Mit Ausnahme derjenigen Kurbelscheibe, die unmittelbar an das erste Schwungrad 8 angrenzt, ist in jeder Kurbelscheibe in der Vertiefung 25 eine Demontagescheibe 26 lose eingelegt. Das erste Schwungrad 8 und die Antriebswelle 3 können auch aus einem einzigen Werkstück bestehen.

Das erste Schwungrad 8 hat zur Aufnahme einer Kurbelscheibe eine Vertiefung 53, während das zweite Schwungrad 9 zum gleichen Zweck mit einem entsprechenden Vorsprung 54 versehen ist. Dieser Vorsprung 54 hat ebenfalls eine Bohrung mit einem Gewindeansatz und eine Vertiefung zur Aufnahme einer Montagescheibe wie die Kurbelscheiben selbst. Das zweite Schwungrad 9 ist an der Innenseite des Gehäusedeckels 10 gelagert, und zwar an einem Lagerzapfen 11, auf dem ein Wälzlager 12 sitzt. Die beiden Schwungräder 8 und 9 sind auf an sich bekannte Weise exzentrisch ausgebildet, um einen Massenausgleich zur Kurbelwelle herzustellen. Jedes Schwungrad ist mit einer Montagebohrung 18 versehen, an welcher die Schwungräder mit Hilfe eines angedeuteten, geschliffenen Bolzens 55 bei der Montage genau winkelkongruent aufeinander ausgerichtet werden können. Durch diese äusserst einfache und zweckmässige Anordnung kann eine Beibehaltung der Position erreicht werden, ohne dass aufwendige Keile, Stifte oder dergleichen zwischen den Bauteilen erforderlich sind. Dadurch ist gewährleistet, dass sich nach dem Festziehen der Spannschrauben 7 das Gegenlager 12 genau in der Verlängerung der Mittelachse des Kurbelwellenlagers 13 befindet.

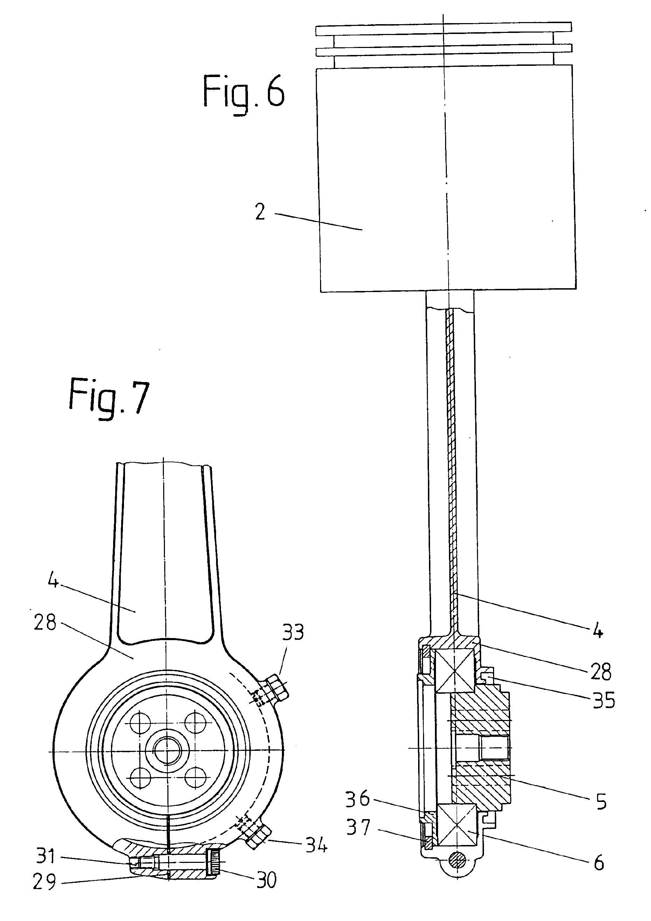

Der Aufbau einer Pleuelstange 4 ist aus den Figuren 6 und 7 genauer ersichtlich. Die Pleuelstange hat einen doppel-T-förmigen Querschnitt und ist beispielsweise aus Leichtmetall- oder aus Stahlguss hergestellt. Am oberen Ende ist auf an sich bekannte Weise der Kolben 2 angelenkt. Der Kolben könnte aber auch über einen Kreuzkopf mit der Pleuelstange verbunden sein. Das eigentliche Pleuellager besteht aus einem Pleuelkranz 28, der mit einem radialen Schlitz 29 versehen ist. Im Bereich dieses Schlitzes kann eine Spannschraube 30 durch eine Bohrung 32 in eine Gewindebohrung 31 eingeschraubt werden. Mit Hilfe dieser Schraube lässt sich ersichtlicherweise der geschlitzte Pleuelkranz 28 zusammenziehen, so dass er um das Wälzlager 6 gespannt werden kann. Das Wälzlager 6 ist seitlich mit einer Labyrinthscheibe 36 abgeschlossen, die mit einem Sprengring 37 fixiert ist. Einstückig mit dem Pleuelkranz 28 verbunden ist ausserdem ein Labyrinthansatz 35. Wie aus Figur 1 ersichtlich ist, greifen die Labyrinthansätze und Labyrinthscheiben im montierten Zustand ineinander und bilden derart eine zusätzliche Sicherheit gegen aus den Wälzlagern auslaufendes Schmiermittel und eindringenden Staub. Der Durchmesser der Labyrinthansätze und Labyrinthscheiben ist nur geringfügig grösser als der Aussendurchmesser der Distanzschultern 20 an den Kurbelscheiben 5.

Im Ausführungsbeispiel ist ein Kolbenkompressor mit vier Kolben dargestellt. Entsprechend besteht der Kurbeltrieb aus insgesamt vier aufeinandergeschichteten Scheiben. Bei einem Kompressortyp mit nur drei oder mit nur zwei Kolben können jedoch genau die gleichen Kurbelscheiben für den Aufbau des Kurbeltriebs verwendet werden, womit die Herstellung innerhalb einer ganzen Typenreihe wesentlich vereinfacht werden kann.

Ein wesentlicher Vorteil bei der Demontage des Kurbeltriebs ist in Figur 5 dargestellt. Die Abbildung zeigt das Kurbelgehäuse gemäss Figur 1, bei dem der Gehäusedeckel 10 mit dem zweiten Schwungrad 9 bereits entfernt wurde. Ebenfalls entfernt sind die Spannschrauben 7 und die beiden ersten Pleuelstangen mit ihren dazugehörigen Kurbelscheiben. Dargestellt ist die Demontage der dritten Kurbelscheibe. Zu diesem Zweck wird eine Hilfsschraube 27 in den Gewindeabschnitt 24 eingeschraubt. Diese Hilfsschraube stützt sich an der Demontagescheibe 26 ab, wobei diese gegen die anschliessende Kurbelscheibe gepresst wird. Ohne diese Demontagescheibe würde die Hilfsschraube ersichtlicherweise auch noch in den Gewindeabschnitt der nächstfolgenden Kurbelscheibe eingeschraubt. Das Drehen der Hilfsschraube 27 bewirkt nun, dass die Kurbelscheibe mit ihrem schmalen Zapfen 22 aus dem Innenring des nächstfolgenden Wälzlagers gezogen wird. Auf die gleiche Weise können alle übrigen Kurbelscheiben entfernt werden, wobei sich die Hilfsschraube 27 bei der letzten Kurbelscheibe direkt am ersten Schwungrad 8 abstützt. Dies ist auch der Grund, warum bei dieser letzten Kurbelscheibe keine Demontagescheibe eingelegt werden muss. Bei der Montage der Kurbelscheiben kann ebenfalls eine Hilfsschraube zum Einpressen benutzt werden, wobei dann allerdings wenigstens zwei Spannschrauben 7 als Widerlager benutzt werden.

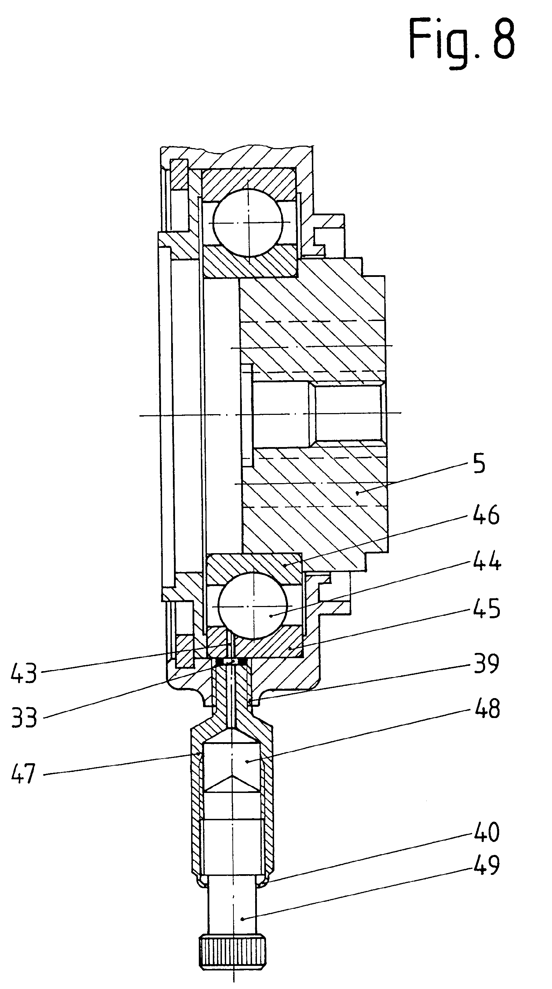

Wie aus Figur 7 ersichtlich ist, sind am Aussenmantel des Pleuelkranzes 28 zwei Augen 34 angeordnet, die je eine durchgehende Schmieröffnung 33 aufweisen. In eine dieser Schmieröffnungen kann wahlweise je nach der Seitenlage des Pleuels eine Schmiervorrichtung für die Nachschmierung der Wälzlager eingesetzt werden. Gemäss Figur 8 wird eine kleine Schmierpresse 47 an einem Gewinde 39 in die Schmieröffnung 33 eingeschraubt. Die Schmierpresse 47 hat eine Depotzone 48, in welcher durch das Herstellwerk genau dosiert ein spezielles Schmiermittel eingefüllt werden kann. Diese Depotzone kann durch Eindrehen einer Schraube 49 ausgepresst werden.

Um ein unbefugtes oder unbeabsichtigtes Entfernen der Schraube zu verhindern, ist der äussere Rand 40 der Presse etwas eingekrimpt. Ausserdem hat die Schraube 49 ein Linksgewinde, so dass das Einschrauben normaler Schrauben nicht möglich ist. Dadurch ist die Schmiervorrichtung insgesamt derart gestaltet, dass das Nachfüllen mit normalem Fett oder die Verwendung einer normalen Fettpresse verunmöglicht ist.

Das Wälzlager hat einen Aussenring 45, der im Bereich der Schmieröffnung 33 mit einer feinen Bohrung 43 versehen ist. Auf diese Weise kann das Schmiermittel unmittelbar an die Wälzkörper 44 gelangen, ohne dass alte Fettschichten verdrängt werden. Mit 46 ist der Innenring des Wälzlagers dargestellt.

Selbstverständlich sind hier alternative Lösungen denkbar. So könnte z.B. auch ein ganz konventioneller Schmiernippel in die Schmieröffnung 33 eingesetzt werden. Dabei besteht allerdings die Gefahr, dass durch unsachgemässe Handhabung dem Wälzlager Schmiermittel in falscher Dosierung oder von falscher Zusammensetzung zugeführt wird.

## Patentansprüche

1. Kolbenkompressor, insbesondere ölfreier Kolbenkompressor, mit wenigstens zwei Kolben und mit einem Kurbelgehäuse (1), in dem die Kolben über einen Kurbeltrieb mit einer gemeinsamen Antriebswelle (3) verbunden sind, dadurch gekennzeichnet, dass der Kurbeltrieb für jeden Kolben eine separate Kurbelscheibe (5) aufweist, welche an ihrem Aussenumfang ein Wälzlager (6) zur Lagerung einer Pleuelstange (4) trägt, wobei die Kurbelscheiben kongruente Achsen aufweisen, welche relativ zur Antriebswelle exzentrisch angeordnet sind, und dass die Kurbelscheiben mit wenigstens zwei Spannschrauben (7), welche die Kurbelscheiben ausserhalb ihres Zentrums durchdringen, zu einem Paket zusammenpressbar sind.

2. Kolbenkompressor nach Anspruch 1, dadurch gekennzeichnet, dass die Kurbelscheiben (5) fest mit den ihnen zugeordneten Wälzlagern (6) und Pleuelstangen (4) verbunden sind.

3. Kolbenkompressor nach Anspruch 1 oder 2, dadurch gekennzeichnet, dass die Spannschrauben (7) in die Antriebswelle (3) und/oder in eine an der Antriebswelle befestigte erste Kurbelwange (8) einschraubbar sind.

4. Kolbenkompressor nach einem der Ansprüche 1 bis 3, dadurch gekennzeichnet, dass die Wälzlager (6) derart auf den Kurbelscheiben (5) angeordnet sind, dass sie Zentrier- und Distanzelemente bilden, und dass die Presskraft der Spannschrauben (7) durch die Wälzlager übertragen wird.

5. Kolbenkompressor nach einem der Ansprüche 1 bis 4, dadurch gekennzeichnet, dass jede Kurbelscheibe (5) im Zentrum eine Bohrung (23) mit einem Gewindeabschnitt (24) aufweist, der stirnseitig mit einer eingelegten Demontagescheibe (26) verschliessbar ist, wobei zur Demontage der Kurbelscheiben eine Hilfsschraube (27) in den Gewindeabschnitt einschraubbar ist, die an der Demontagescheibe abstützbar ist.

6. Kolbenkompressor nach einem der Ansprüche 1 bis 5, dadurch gekennzeichnet, dass das Kurbelgehäuse (1) in der Achse der Antriebswelle (3) mit einem Gehäusedeckel (10) verschliessbar ist, dessen Innenseite als Lagerstelle (11) für den Kurbeltrieb ausgebildet ist.

7. Kolbenkompressor nach Anspruch 6, dadurch gekennzeichnet, dass an der Innenseite des Gehäusedeckels eine zweite Kurbelwange (9) gelagert ist und dass die Kurbelscheiben (5) zwischen der ersten und der zweiten Kurbelwange fixiert und relativ zueinander zentriert sind.

8. Kolbenkompressor nach Anspruch 7, dadurch gekennzeichnet, dass beide Kurbelwangen (8, 9) zur winkelkongruenten Ausrichtung je eine Montagebohrung (18) aufweisen, durch welche vor dem Anziehen der Spannschrauben (7) ein gemeinsamer Bolzen (55) durchschiebbar ist.

9. Kolbenkompressor nach einem der Ansprüche 1 bis 8, da durch gekennzeichnet, dass die Kurbelscheiben mit vier Spannschrauben zusammenpressbar sind.

10. Kolbenkompressor nach einem der Ansprüche 1 bis 9, dadurch gekennzeichnet, dass jede Pleuelstange (4) kurbelseitig einen Pleuelkranz (28) mit einem radialen Schlitz (29) aufweist, und dass im Bereich des Schlitzes eine tangential verlaufende Spannschraube (30) angeordnet ist, mit welcher der Pleuelkranz um das ihm zugeordnete Wälzlager (6) spannbar ist.

11. Kolbenkompressor nach Anspruch 10, dadurch gekennzeichnet, dass jeder Pleuelkranz (28) auf der Aussenseite wenigstens eine radiale Schmieröffnung (33) aufweist, in die eine Schmiervorrichtung einsetzbar ist und über welche ein Schmiermittel unmittelbar zum Wälzlager (6) transportierbar ist.

12. Kolbenkompressor nach Anspruch 11, dadurch gekennzeichnet, dass die Schmiervorrichtung als Presse (47) mit einer Depotzone (48) ausgebilet ist, deren Volumen zum Auspressen eines Schmiermittels mit einer Schraube (49) reduzierbar ist.

13. Kolbenkompressor nach einem der Ansprüche 10 bis 12, dadurch gekennzeichnet, dass das Kurbelgehäuse (1) in einem parallel zur Antriebswelle verlaufenden beschnitt eine verschliessbare Oeffnung (15) aufweist, über welche die Pleuelkränze der Pleuelstangen zugänglich sind.

## Claims

1. A piston compressor, in particular an oil-free piston compressor, comprising at least two pistons and a crankcase (1) in which the pistons are connected by way of a crank assembly to a common drive shaft (3), characterised in that the crank assembly has for each piston a separate crank disc (5) which at its outer periphery carries a rolling bearing (6) for mounting a connecting rod (4), wherein the crank discs have congruent axes which are arranged eccentrically relative to the drive shaft, and that the crank discs can be pressed together to form a set by at least two clamping screws (7) which pass through the crank discs outside their centre.

2. A piston compressor according to claim 1 characterised in that the crank discs (5) are fixedly connected to the connecting rods (4) and rolling bearings (6) associated with the crank discs.

3. A piston compressor according to claim 1 or claim 2 characterised in that the clamping screws (7) can be screwed into the drive shaft (3) and/or into a first crank web (8) which is fixed to the drive shaft.

4. A piston compressor according to one of claims 1 to 3 characterised in that the rolling bearings (6) are arranged on the crank discs (5) in such a way that they form centering and spacer elements, and that the pressing force of the clamping screws (7) is transmitted by the rolling bearings.

5. A piston compressor according to one of claims 1 to 4 characterised in that each crank disc (5) has in the centre a bore (23) having a screwthreaded portion (24) which can be closed at the end by an inserted dismantling disc (26), wherein for dismantling of the crank discs an auxiliary screw (27) can be screwed into the screwthreaded portion, which screw can be braced against the dismantling disc.

6. A piston compressor according to one of claims 1 to 5 characterised in that the crank case (1) can be closed on the axis of the drive shaft (3) by a casing cover (10) whose inside is in the form of a mounting location (11) for the crank assembly.

7. A piston compressor according to claim 6 characterised in that a second crank web (9) is mounted at the inside of the casing cover and that the crank discs (5) are fixed between the first and second crank webs and centered relative to each other.

8. A piston compressor according to claim 7 characterised in that for angularly congruent alignment the two crank webs (8, 9) each have a respective mounting bore (18) through which a common pin (55) can be passed before the clamping screws (7) are tightened.

9. A piston compressor according to one of claims 1 to 8 characterised in that the crank discs can be pressed together by four clamping screws.

10. A piston compressor according to one of claims 1 to 9 characterised in that each connecting rod (4) has at the crank end a connecting rod eye (28) with a radial slit (29) and that disposed in the region of the slit is a tangentially extending clamping screw (30) with which the connecting rod eye can be tightened around the rolling bearing (6) associated therewith.

11. A piston compressor according to claim 10 characterised in that each connecting rod eye (28) has on the outside at least one radial lubricating opening (33) into which a lubricating means can be fitted and by way of which a lubricant can be transported directly to the rolling bearing (6).

12. A piston compressor according to claim 11 characterised in that the lubricating means is in the form of a press (47) with a depot zone (48) whose volume can be reduced for expelling a lubricant by a screw (49).

13. A piston compressor according to one of claims 10 to 12 characterised in that the crank case (1), in a portion extending parallel to the drive shaft, has a closable opening (15) by way of which the eyes of the connecting rods are accessible.

## Revendications

1. Compresseur à pistons, et en particulier compresseur sans huile, avec au moins deux pistons, et comprenant un carter de manivelle (1), dans lequel les pistons sont reliés, par le biais d'un mécanisme à bielle et manivelle, à un arbre de transmission (3) commun, caractérisé en ce que le mécanisme à bielle et manivelle présente pour chaque piston un bras de manivelle (5) séparé qui, à sa périphérie, porte un roulement à billes (6) pour le montage d'une bielle (4), tandis que les bras de manivelle présentent des axes congruents qui sont disposés de manière excentrique par rapport à l'arbre de transmission, et en ce que les bras de manivelle sont rassemblés en paquet au moyen d'au moins deux vis de serrage (7), qui traversent les bras de manivelles en dehors de leur centre.

2. Compresseur à pistons suivant la revendication 1, caractérisé en ce que les bras de manivelle (5) sont reliés de manière fixe aux roulements à billes (6) et aux bielles (4) correspondants.

3. Compresseur à pistons suivant la revendication 1 ou 2, caractérisé en ce que les vis de serrage (7) peuvent être vissées dans l'arbre de transmission (3) et/ou dans un premier volant (8) fixé à l'arbre de transmission.

4. Compresseur à pistons suivant l'une des revendications 1 à 3, caractérisé en ce que les roulements à billes (6) sont disposés sur les bras de manivelle (5) de façon à constituer des éléments de centrage et d'espacement, et que la force de pression des vis de serrage (7) est transférée par les roulements à billes.

5. Compresseur à pistons suivant l'une des revendications 1 à 4, caractérisé en ce que chaque bras de manivelle (5) présente en son centre un alésage (23) avec une partie filetée (24), qui peut être obturé sur sa face frontale par une plaque de démontage (26) insérée, tandis que pour le démontage des bras de manivelles, une vis d'assistance (27) qui peut s'appuyer sur la plaque de démontage, peut être vissée dans la partie filetée

6. Compresseur à pistons suivant l'une des revendications 1 à 5, caractérisé en ce que le carter de manivelle (1) peut être obturé, dans l'axe de l'arbre de transmission (3), au moyen d'un couvercle de carter (10), dont la face intérieure est conçue comme point d'appui (11) d'un mécanisme à bielle et manivelle.

7. Compresseur à pistons suivant la revendication 6, caractérisé en ce qu'un deuxième volant (9) est monté sur la face intérieure du couvercle de carter et que les bras de manivelle (5) sont fixés et centrés l'un par rapport à l'autre entre le premier et le deuxième volant.

8. Compresseur à pistons suivant la revendication 7, caractérisé en ce que les deux volants (8, 9) présentent chacun un alésage de montage (18) pour une disposition congruente angulairement, au travers desquels un goujon (55) commun peut être glissé avant le serrage des vis de serrage (7).

9. Compresseur à pistons suivant l'une des revendications 1 à 8, caractérisé en ce que les bras de manivelle peuvent être pressés ensemble au moyen de quatre vis.

10. Compresseur à pistons suivant l'une des revendications 1 à 9, caractérisé en ce que chaque bielle (4) présente, du côté de la manivelle, un collier de tête de bielle (28) avec une fente radiale (29), et que, dans la zone de la fente, une vis de serrage (30) est disposée tangentiellement, au moyen de laquelle le collier de tête de bielle peut être serré autour du roulement à billes (6) qui y est associé.

11. Compresseur à pistons suivant la revendication 10, caractérisé en ce que chaque collier de tête de bielle (28) présente sur sa face extérieure au moins une ouverture de lubrification (33) radiale, dans laquelle peut être inséré un dispositif de lubrification par lequel un lubrifiant peut être amené directement au roulement à billes (6).

12. Compresseur à pistons suivant la revendication 11, caractérisé en ce que le dispositif de lubrification est construit sous forme d'un injecteur 47 avec une zone de stockage (48) dont le volume peut être réduit au moyen d'une vis (49) pour injecter un lubrifiant.

13. Compresseur à pistons suivant l'une des revendications 10 à 12, caractérisé en ce que le carter de manivelle (1) présente, dans une partie s'étendant parallèlement à l'arbre de transmission, une ouverture (15) qui peut être obturée, au travers de laquelle sont accessibles les colliers de tête de bielle, des bielles.
